# DEMANDE DE BREVET EUROPEEN

(11) **EP 0 719 973 A1**
(43) Date de publication de la demande: **03.07.1996**
(21) Numéro de dépôt: 95402785.0
(22) Date de dépôt: 12.12.1995
(51) Int. Cl.: F16L 37/244, F16L 37/46

(54) **Embout, dispositif et ensemble de liaison de conduites, notamment de conduites de gaz**

(30) Priorité: 30.12.1994 FR 9415946
(71) Demandeur: GAZ DE FRANCE (SERVICE NATIONAL), F-75017 Paris (FR)
(72) Inventeur: Marcel, Patrick, F-77500 Chelles (FR); Veyretout, Francois, F-75018 Paris (FR)
(74) Mandataire: Lerner, François

(57) **Abrégé**

Il s'agit d'un dispositif (2) de liaison amovible comprenant deux embouts tubulaires (6, 8) qui comportent des moyens d'obturation (28, 30) disposés dans l'un d'eux pour obturer ou ouvrir son passage intérieur ; des moyens de verrouillage (72, 74, 76) agissant par déplacement relatif de certaines parties (10, 22) au moins des embouts, entre une position déverrouillée où les embouts sont séparables et une position verrouillée où ils sont maintenus unis et des moyens de commande (36, 38) dépendants des moyens de verrouillage, pour établir une communication entre les passages intérieurs des embouts, lorsque ces derniers sont à l'écart de la position déverrouillée et fermer cette communication lorsque ces embouts sont déplacés vers cette position déverrouillée.

Application au raccordement de conduites transportant en particulier un gaz.

## Description

L'invention a notamment pour objet un dispositif de liaison d'au moins deux conduites entre elles qui permet en particulier d'améliorer la fiabilité du raccordement, de manière simple et économique.

L'invention trouve son application tout particulièrement dans le domaine gazier, par exemple pour relier un appareil fonctionnant au gaz au réseau d'alimentation, par l'intermédiaire d'une conduite flexible. L'invention pourrait également s'appliquer dans le domaine de la distribution d'eau ou d'autres matières, telles des poudres, pour le raccordement des conduites à travers lesquelles doivent circuler ces matières.

Notamment dans le domaine de la distribution de gaz, il existe déjà des systèmes de liaison utilisés en particulier pour raccorder une conduite souple par exemple reliée à une gazinière avec une canalisation du réseau d'alimentation en gaz. Ces systèmes consistent habituellement en un robinet "quart de tour" monté sur la canalisation d'alimentation, la conduite souple étant emmanchée à force sur l'embout de sortie de gaz du robinet et pouvant éventuellement être serrée par une bague.

A l'usage, il s'avère que la connexion entre l'embout et la conduite souple n'est pas toujours fiable.

Notamment, la conduite souple peut être soumise à une traction, par exemple accidentelle ou due au déplacement de l'appareil à alimenter, ce qui peut alors provoquer son déplacement le long de l'embout (avec le risque d'une séparation ultérieure) voire son détachement.

La conduite peut également être incorrectement montée sur l'embout, en particulier parce que la plupart des robinets ne comportent pas d'indicateur précis signalant à l'opérateur l'engagement suffisant de cette conduite sur l'embout.

Le montage correct de la conduite souple peut également s'avérer délicat, par exemple si l'embout du robinet a une longueur ne permettant pas un engagement satisfaisant de la conduite ou encore du fait que le raccordement exige l'application d'une force importante d'engagement. Dans ce dernier cas, l'opérateur peut appliquer un savon (ou une substance équivalente) sur l'embout et/ou à l'intérieur de la conduite pour faciliter leur liaison, mais alors les risques de détachement deviennent plus importants.

L'invention a notamment pour but de remédier à ces inconvénients en proposant un dispositif de liaison qui comprend au moins deux embouts de liaison, pour un raccordement amovible de conduites entre elles, ces embouts présentant chacun un passage intérieur et comportant :
- des moyens mobiles d'obturation disposés à l'intérieur du premier embout de liaison pour obturer ou ouvrir son passage intérieur,
- des moyens de verrouillage comportant des premiers moyens et des seconds moyens disposés respectivement sur le premier et le deuxième embout, pour être réunis ensemble par déplacement relatif d'une partie au moins de l'un des embouts par rapport à l'autre embout, entre une première position déverrouillée où les embouts sont positionnés l'un par rapport à l'autre avec possibilité de séparation et une seconde position verrouillée où les embouts sont maintenus unis sensiblement coaxialement, en passant par une position intermédiaire d'amorçage du verrouillage où lesdits premiers et seconds moyens amorcent leur réunion, et
- des moyens de commande des moyens d'obturation, caractérisé en ce que les moyens d'obturation sont actionnés par les moyens de verrouillage, par l'intermédiaire des moyens de commande, pour que l'ouverture du passage dudit premier embout s'opère, uniquement à partir de ladite position intermédiaire des moyens de verrouillage, lors d'un déplacement vers ladite position verrouillée, et que sa fermeture soit obtenue avant que cette même position intermédiaire soit atteinte, lors d'un déplacement desdits moyens de verrouillage vers ladite position déverrouillée.

Suivant une variante de construction, lesdits premiers et seconds moyens coopèrent entre eux suivant un engagement à baïonnette. Ainsi, le raccordement des conduites est particulièrement aisé, sans avoir à appliquer une force importante.

De préférence, les moyens d'obturation sont déplacés par les moyens de verrouillage , par l'intermédiaire des moyens de commande, en même temps que les moyens de verrouillage sont eux-mêmes déplacés entre lesdites position intermédiaire et seconde verrouillée, pour obtenir une ouverture ou une fermeture progressive dudit passage du premier embout.De ce fait, l'ouverture et la fermeture se font progressivement durant sensiblement toute la durée dudit déplacement dans un sens ou dans l'autre.

Toujours dans un souci d'assurer la sécurité du montage, les moyens de verrouillage comprennent des moyens de blocage pour immobiliser les embouts l'un par rapport à l'autre, de manière libérable, dans la seconde position.

Un problème corollaire que s'est également attaché à résoudre l'invention est celui du passage d'un fluide à travers le dispositif avec des pertes de charges minimum, en particulier lorsqu'il s'agit d'un gaz basse pression, par exemple à une pression d'environ 20 millibars pour l'alimentation des installations domestiques.

La solution proposée consiste, lorsque les moyens d'obturation comportent deux disques superposés et chacun pouvu d'au moins une ouverture, à prévoir dans le premier embout deux éléments de guidage de la matière propre à circuler à travers le dispositif, ces éléments de guidage étant disposés de part et d'autre des disques auxquels ils sont liés et présentant, l'un, une face d'attaque et l'autre, une face de fuite à surface courbe. Ces éléments de guidage peuvent présenter une forme générale de diabolo.

L'invention se rapporte également à un des embouts de liaison en tant que tel du dispositif précité ainsi qu'à un ensemble constitué de ce dispositif auquel sont reliées au moins deux conduites.

L'invention et sa mise en oeuvre apparaîtront plus clairement à l'aide de la description qui va suivre faite en référence aux dessins annexés, donnés uniquement à titre d'illustration. Dans ces dessins :
- la figure 1 montre l'ensemble de liaison de l'invention, les embouts du dispositif n'étant pas verrouillés entre eux ;
- la figure 2 est une vue agrandie, en coupe longitudinale de l'ensemble de la figure 1 ;
- les figures 3 et 4 montrent deux étapes successives du verrouillage des embouts du dispositif de la figure 1, seule une des conduites ayant été représentée ;
- la figure 5 est une vue faite selon les flèches V de la figure 4 ;
- les figures 6, 7 et 8 montrent trois étapes successives de verrouillage des embouts d'une variante du dispositif de la figure 1 ;
- les figures 9 et 10 montrent, en vue agrandie et en perspective, un mode possible de réalisation des moyens d'obturation du dispositif de la figure 1 ; et
- la figure 11 est une vue en perspective agrandie, avec arrachements, d'une pièce-support des moyens d'obturation de la figure 9.

Dans ce qui suit, on ne traitera par souci de clarté que du cas d'un dispositif de liaison de conduites propres à transporter un gaz, ceci n'excluant toutefois aucunement l'application à des structures tubulaires, telles que des conduites de transport de liquides (eau) ou de poudres. Les conduites à raccorder pourront être souples ou rigides, telles en caoutchouc ou en métal et incluent notamment une sortie tubulaire d'un robinet.

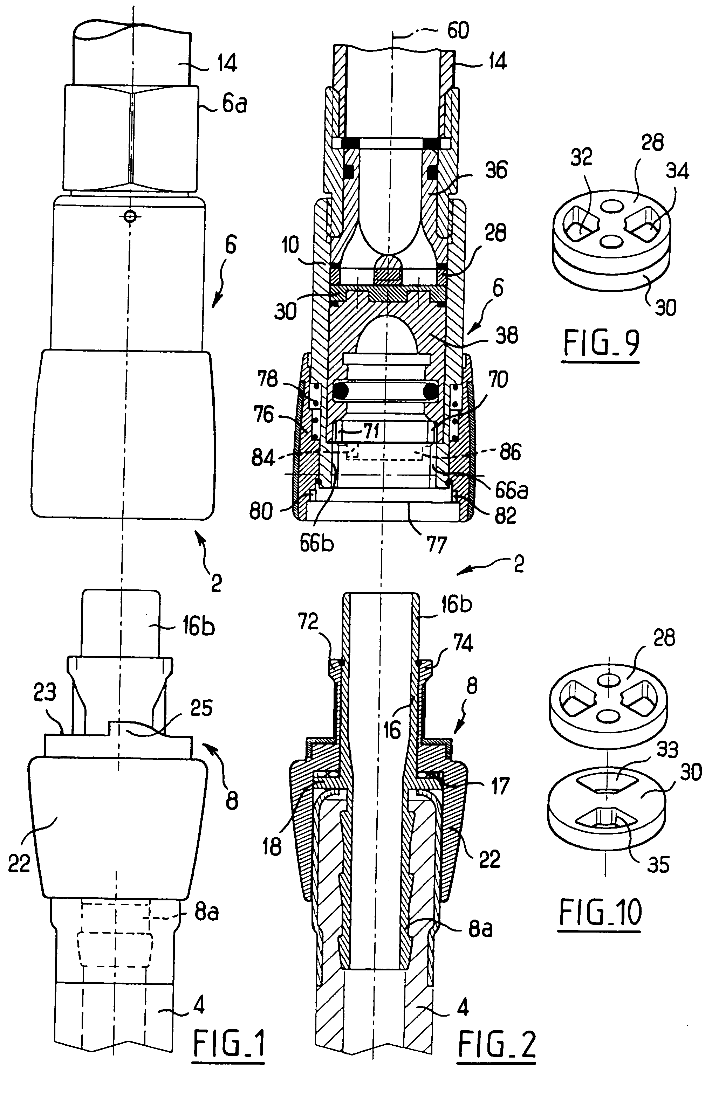

A la figure 1, on voit représenté un ensemble de liaison conforme à l'invention comprenant un dispositif 2 pour relier en l'espèce un robinet (non représenté dans sa totalité et monté sur une canalisation du réseau d'alimentation en gaz) avec une conduite souple en caoutchouc 4, par exemple raccordée à un appareil (non représenté) à alimenter en gaz. Ce raccord 2 comporte deux éléments tubulaires ouverts de part en part ou embouts de liaison 6 et 8, le premier embout 6 étant ici vissé, à une de ses extrémités 6a de jonction, sur une sortie de gaz 14 du robinet et le second embout 8 étant fixé, à une de ses extrémités 8a de jonction, à la conduite 4.

L'embout par lequel va arriver le gaz dans le dispositif 2 une fois fermé renferme des moyens d'obturation 28 et 30, actionnés par des moyens de commande 36, 38, 72, pour la fermeture ou l'ouverture de son passage intérieur. Le dispositif comporte également des moyens de verrouillage des embouts entre eux (ici un système à baïonnette comportant au moins un ergot 74 propre à être retenu derrière un épaulement 64).

Le principe général de fonctionnement imaginé dans l'invention est tel que pour relier les conduites 4 et 14 en établissant une communication entre elles, les embouts 6 et 8 sont mis en contact sensiblement coaxialement puis le verrouillage est opéré par un déplacement relatif de certaines parties au moins des embouts pour amener les embouts d'un premier état où ils sont en contact mais séparables l'un de l'autre dans un second état où ils sont maintenus verrouillés. Les moyens de commande sont liés aux moyens de verrouillage pour que le passage de l'embout qui renferme les moyens d'obturation ne puisse être ouvert qu'à partir du moment où le verrouillage est amorcé (à partir du moment où les embouts sont écartés de leur état premier et qu'ils ont atteint une position intermédiaire d'amorçage du verrouillage par début d'engagement de l'ergot 74 derrière l'épaulement 64).

Un déplacement relatif inverse desdites parties ramène les embouts vers leur état premier et provoque la fermeture de la communication entre les conduites préalablement au déverrouillage des embouts.

Dans la version illustrée figures 1 à 5, l'élément 6, d'axe 60, comprend un corps extérieur tubulaire 10 à section sensiblement circulaire. Ce corps 10 rigide, par exemple métallique, comporte à son extrémité 61 (qui est opposée à l'extrémité 6a) un bord intérieur 62 définissant un épaulement annulaire intérieur 64 de retenue de deux ergots 72 et 74 formés sur l'embout 8 (en l'espèce ces ergots assurent l'entraînement d'une pièce de commande 38 et également le verrouillage). Le rebord 62 présente au moins une fente axiale interne, ici deux référencées 66a et 66b, pour le passage des ergots jusque derrière l'épaulement 64, les ergots étant propres à venir en appui contre l'épaulement pour verrouiller les embouts. En variante, les ergots pourraient être formés sur la face intérieure du corps 10 et un bord extérieur définissant l'épaulement serait formé sur l'embout 8.

Cet élément 8 comprend un tube 16 rigide qui présente une extrémité mâle libre 16b pour l'engagement étroit dans l'extrémité femelle 61 du corps 10, de manière étanche, grâce à un joint annulaire d'étanchéité 21 maintenu dans le corps. Ce tube comporte, ici vers sa partie médiane, une collerette extérieure de butée 18 pour bloquer axialement la conduite 4 qui est emmanchée à force sur le tube. Une bague plastique 22 de prise en main est fixée sensiblement coaxialement sur le tube qu'elle enserre sur une partie de sa longueur, en laissant dégagée l'extrémité 16b. Cette bague qui recouvre également l'extrémité de la conduite 4 comprend un épaulement intérieur 17 d'appui contre la collerette 18 et un épaulement externe 23 portant au moins un ergot de butée contre le rebord 62, ici deux ergots 25 et 27. En l'espèce, elle porte aussi les ergots 72 et 74.

Les moyens de verrouillage comprennent également une bague de blocage 76 faisant partie de l'embout 6 et qui est montée axialement mobile (sans rotation possible) autour du corps 10 grâce à des moyens-ressorts 78, ceux-ci la maintenant naturellement dans une position avancée par rapport au corps. Cette bague comprend un épaulement annulaire intérieur 77 de butée des ergots 25 et 27, au moins une entaille intérieure, ici deux 80 et 82, étant formée dans cet épaulement 77 pour le logement de manière étroite des ergots 25 et 27 lorsque les embouts sont dans le second état. L'entrée des ergots 25 et 27 dans les logements 80 et 82 immobilise les parties des embouts qui se déplacent l'une par rapport à l'autre entre les premier et second états et provoque un petit bruit sec (claquement) indiquant à l'opérateur que les embouts sont immobilisés en verrouillage. Pour libérer les ergots l'opérateur agit à l'encontre du ressort 78.

Les moyens d'obturation comportent deux parties qui peuvent être déplacées l'une par rapport à l'autre pour fermer de manière étanche aux fluides ou ouvrir, progressivement, le passage 26 de l'embout 6. Ces parties consistent ici en deux disques ou plaquettes 28 et 30, de diamètre sensiblement égal au diamètre intérieur de l'embout 6 (figures 9 et 10). Ces disques, superposés et disposés sensiblement perpendiculairement à l'axe 60, sont par exemple réalisés en céramique (oxyde d'aluminium frité Al₂O₃) ou en polyamide et présentent chacun au moins une ouverture, en l'espèce deux ouvertures en forme de secteur, diamétralement opposées (références 32, 33, 34 et 35).

Pour le maintien des disques, deux pièce-supports des disques 36 et 38 sont fixées aux disques en étant disposées étroitement à l'intérieur du corps 10, sensiblement coaxialement et de part et d'autre des disques. Par rapport au plan de jonction des disques, la pièce 36 est du côté de l'extrémité 6a et la pièce 38 est du côté de l'extrémité femelle 61 et présente une extrémité 38b en appui contre l'épaulement 64. Ces pièces tubulaires comportent chacune une partie principale cylindrique 41, 43, coaxiale au corps 10 et une partie ou paroi terminale 37, 39 de fixation contre un disque, cette paroi sensiblement normale à l'axe 60 étant à une extrémité du cylindre. Chaque paroi définit avec sa partie cylindrique correspondante un nombre d'ouvertures égal à celui des disques, ces ouvertures 52 54, 56 et 58 des pièces 36 et 38 étant sensiblement identiques à celles des disques et formées en regard de celles des disques. Ainsi, les parois 37 et 39 présentent chacune, en l'espèce, une forme générale de "diabolo" ou de "papillon".

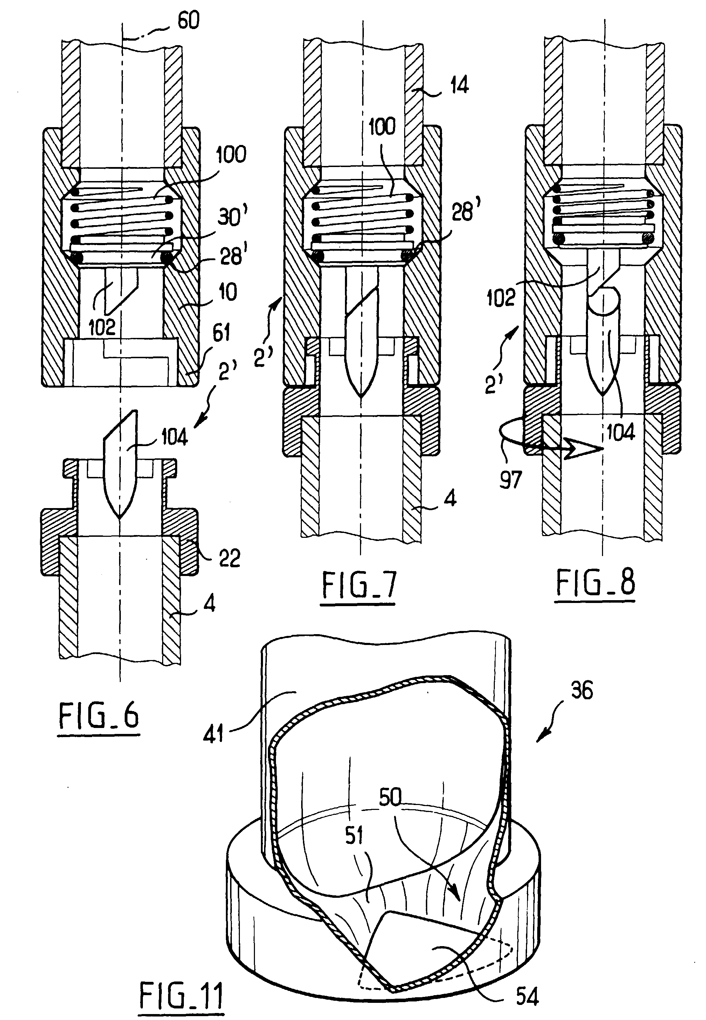

En particulier lorsque la matière en circulation dans les conduites sera un gaz ou un liquide, l'embout 6 comprendra avantageusement des éléments de guidage du fluide, disposés dans son passage 26 de part et d'autre des disques auxquels ils seront fixés. Ces éléments de guidage présentent, l'un, une face "d'attaque" à surface courbe pour le guidage du fluide vers les ouvertures des disques et, l'autre, une face "de fuite" à surface courbe pour le guidage du fluide après son passage à travers les ouvertures des disques. En l'espèce, les éléments de guidage sont constitués chacun par une paroi 37, 39 dont le côté opposé au côté de fixation à un disque à une surface courbe 50 (figure 11) essentiellement convexe (en 51) entre les ouvertures des pièces-supports, ce côté se raccordant à la partie cylindrique par une surface de raccordement également courbe. On notera que ce côté courbe et la face intérieure de la partie cylindrique attenante définiront de préférence un passage de circulation de la matière qui présente une branche principale subdivisée en sous-branches (ici au nombre de deux) débouchant chacune dans une ouverture de la pièce-support. De préférence, la section du passage de circulation restera sensiblement égale sur toute sa longueur pour limiter les pertes de charges, la somme des sections des ouvertures d'un disque étant alors sensiblement égale à la section de la branche principale de la pièce. La somme des sections des ouvertures d'un disque pourrait également être légèrement supérieure à celle de la branche principale.

En variante, les éléments de guidage pouvant être constitués par les disques eux-mêmes, leur côté opposé au côté d'appui contre l'autre disque étant à surface courbe.

On notera la prévision de joints annulaires d'étanchéité 42, 44, 46 pour éviter toute fuite du fluide entre la face interne du corps 10 et la surface périphérique des disques et de leurs pièce-supports.

Pour permettre la rotation relative des plaquettes 28 et 30, la pièce 36 est immobilisée dans le corps 10 (ici grâce à une goupille 40 de la figure 5) et y maintient immobile le disque 28, alors que la pièce 38 est disposée mobile en rotation par rapport au corps, sans translation possible. Pour sa mise en mouvement, la pièce-support 38 présente en l'espèce à son extrémité 38b et sur sa face interne, au moins une encoche, ici deux référencées 70 et 71, de logement des ergots 72 et 74 lorsque l'extrémité de l'embout 8 est introduite dans l'embout 6, ces encoches étant situées dans le prolongement des fentes du rebord 62 lorsque les embouts sont séparés. En l'espèce, des moyens connus limitent la rotation de la pièce 38 dans le corps 10 à un angle d'environ 90° pour permettre soit la mise en quadrature des ouvertures des disques (fermeture du passage puisque les ouvertures ne coïncident pas) soit la mise en coïncidence de ces ouvertures (ouverture maximale), avec toutes les positions intermédiaires. Ces moyens comprennent ici un cran 84 de la pièce 38 propre à se déplacer dans un évidemment 86 formé dans le bord 62 et qui s'étend suivant un angle de 90° augmenté de l'angle déterminé par la largeur du cran (figure 2)

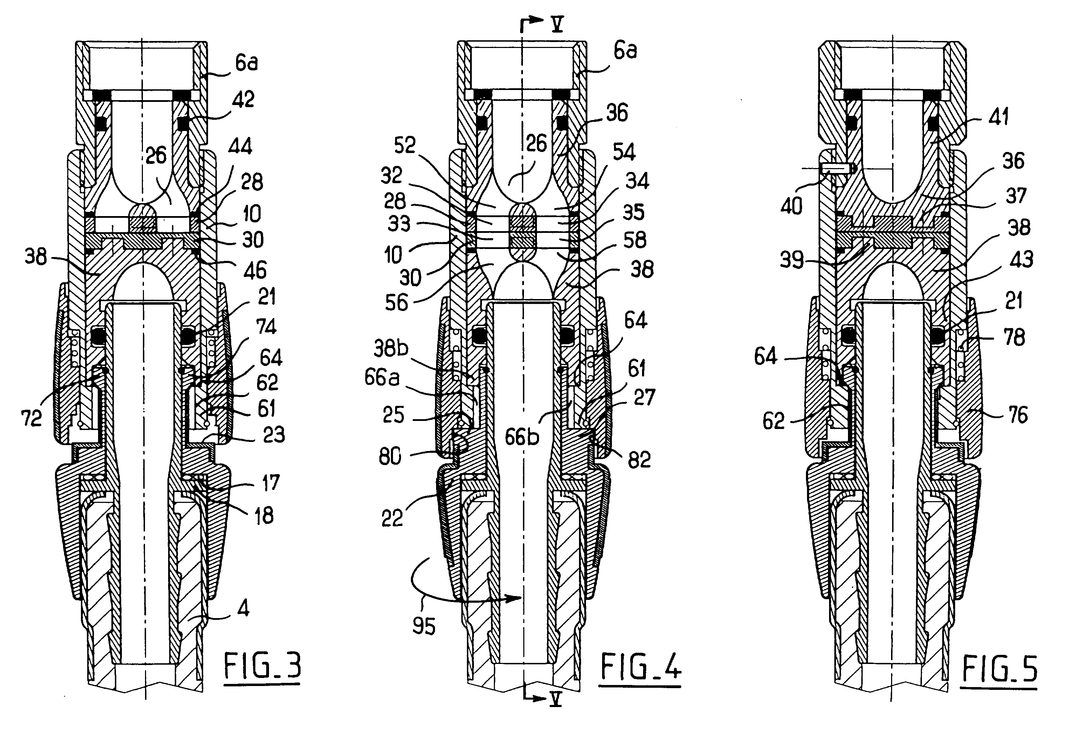

De ce qui précède, on aura compris qu'en positionnant sensiblement coaxialement les embouts de telle sorte que les ergots 72 et 74 soient en face des fentes 66a et 66b, il est possible d'engager l'extrémité mâle 16b dans l'extrémité femelle 61, les ergots 72 et 74 glissant dans leurs fentes jusqu'à venir se loger dans les encoches 70 et 71 de la pièce de commande 38. Les embouts se trouvent alors dans leur position première déverrouillée (figure 3), les ouvertures des disques étant en quadrature. Par rotation relative du corps 10 et de la bague 22 (sens de rotation schématisé par la flèche 95), les ergots 72 et 74 sont déplacés par rapport au rebord 62 et viennent en appui contre l'épaulement 64, ce qui empêche ainsi toute séparation des embouts qui se trouvent verrouillés tant qu'ils ne sont pas ramenés dans leur position première. Simultanément, les ergots entraînent la pièce 38 qui commande la rotation progressive du disque 30, ce qui autorise la circulation du gaz à travers le dispositif (suivant la flèche 19, figure 4). De plus, les ergots 25 et 27 glissent le long de l'épaulement 77 de la bague 76 contre lequel ils sont en appui. Lorsque le cran 84 vient en butée contre une extrémité de l'évidemment 86, la pièce 38 ne peut plus tourner et provoque donc l'arrêt du déplacement du corps 10 par rapport à la bague 22. Les embouts se trouvent alors dans leur position seconde et l'anneau de blocage 76 vient immobiliser le corps 10 et la bague 22 (les ergots 25 et 27 se trouvant en regard de leur logement).

On constate que la pièce de commande 38 est placée sous le contrôle des seuls moyens de verrouillage. Les disques ne peuvent donc être actionnés que par l'intermédiaire de ces moyens de verrouillage, ce qui offre une grande sécurité de fonctionnement.

Ainsi fermé, le dispositif 2 pourra être laissé tout le temps nécessaire, la séparation des embouts avec arrêt préalable de la circulation du gaz s'effectuant par dégagement de la bague 76 et simple inversement des séquences d'opération.

Les figures 6, 7 et 8 représentent, de manière très schématique (notamment la bague 76 n'a pas été représentée), une variante 2' de réalisation du dispositif de l'invention qui se distingue essentiellement du dispositif 2 de part ses moyens d'obturation et leurs moyens de commande.

Le dispositif 2' comprend un clapet mobile 30' et un siège fixe 28' pourvu d'une ouverture. En l'espèce, le siège est formé par un épaulement annulaire intérieur que présente l'embout 6. Le clapet 30', discoïde, est disposé sensiblement perpendiculairement à l'axe 60 et il est maintenu dans l'embout 6 par l'intermédiaire d'un ressort 100 qui le plaque contre le siège 28' pour la fermeture du passage intérieur de l'embout.

Les moyens de commande comprennent en l'espèce deux tiges de commande complémentaires 102 et 104, à extrémité libre biseautée. L'une des tiges 102 est fixée au clapet en s'étendant suivant l'axe 60 et en étant dirigée vers l'extrémité 61 du corps 10. L'autre tige 104 est liée fixement à l'embout 8 de manière connue (liaison non représentée) en émergeant ici de l'extrémité de raccordement 16b. Les deux extrémités biseautées sont ainsi plaquées l'une contre l'autre lors de l'engagement des embouts l'un dans l'autre (figure 7). Par rotation relative des éléments 6 et 8 vers la position seconde (flèche 97), les tiges tournent et se déplacent axialement l'une par rapport à l'autre. Elles écartent ainsi progressivement le clapet de son siège jusqu'à une position d'écartement maximum correspondant à la position seconde des embouts.

Bien entendu, l'invention n'est nullement limitée aux modes de réalisation décrits ci-dessus. En variante, l'embout 8 pourrait comprendre un ou plusieurs ergots d'entraînement de la pièce 38 qui soit (soient) distincts des ergots 72 et 74, la pièce 38 comprenant alors des cavités adaptées de logement des ergots d'entraînement.

Suivant une autre variante, les moyens de verrouillage pourraient comprendre un système différent d'un système à baïonnette (système de vissage par exemple).

Suivant une autre variante encore, l'embout 8 pourrait également renfermer des moyens d'obturation, l'embout 6 comportant alors une pièce de commande des moyens d'obturation, propre à s'engager dans l'extrémité mâle 61 lors du verrouillage des embouts pour actionner les moyens d'obturation de l'embout 8.

On pourrait aussi concevoir que le dispositif 2 comprenne plusieurs embouts femelles similaires à l'embout 6 et propres à être connectés chacun à un embout mâle complémentaire pour permettre de relier plus de deux conduites entre elles.

On pourrait également imaginer de maintenir les disques dans l'embout autrement qu'avec les pièces 36 et 38. Par exemple, l'embout pourrait comprendre une gorge annulaire de logement du bord des disques, une pièce de commande du disque tournant 30 étant néanmoins prévue.

## Revendications

1. Dispositif de liaison (2) entre au moins une première et une seconde conduites (4, 14), comprenant au moins un premier et un second embouts (6, 8) de liaison pour un raccordement amovible des conduites entre elles, ces premier et second embouts présentant chacun un passage intérieur, le dispositif comportant :
- des moyens mobiles d'obturation (28, 28', 30, 30') disposés à l'intérieur du premier embout de liaison pour obturer ou ouvrir son passage intérieur,
- des moyens de verrouillage (25, 27, 64, 72, 74, 76, 80, 82) comportant des premiers moyens et des seconds moyens disposés respectivement sur le premier et le deuxième embout, pour être réunis ensemble par déplacement relatif d'une partie (10, 22) au moins de l'un des embouts par rapport à l'autre embout, entre une première position déverrouillée où les embouts sont positionnés l'un par rapport à l'autre avec possibilité de séparation et une seconde position verrouillée où les embouts sont maintenus unis sensiblement coaxialement, en passant par une position intermédiaire d'amorçage du verrouillage où lesdits premiers et seconds moyens amorcent leur réunion, et
- des moyens de commande (36, 38, 72, 74, 100, 102, 104) des moyens d'obturation,
caractérisé en ce que les moyens d'obturation sont actionnés par les moyens de verrouillage, par l'intermédiaire des moyens de commande, pour que l'ouverture du passage dudit premier embout s'opère, uniquement à partir de ladite position intermédiaire des moyens de verrouillage, lors d'un déplacement vers ladite position verrouillée, et que sa fermeture soit obtenue avant que cette même position intermédiaire soit atteinte, lors d'un déplacement desdits moyens de verrouillage vers ladite position déverrouillée.

2. Dispositif selon la revendication 1,
caractérisé en ce que lesdits premiers et seconds moyens coopèrent entre eux suivant un engagement à baïonnette.

3. Dispositif selon la revendication 1 ou la revendication 2, caractérisé en ce que les moyens d'obturation sont déplacés par les moyens de verrouillage , par l'intermédiaire des moyens de commande, en même temps que les moyens de verrouillage sont eux-mêmes déplacés entre lesdites position intermédiaire et seconde verrouillée, pour obtenir une ouverture ou une fermeture progressive dudit passage du premier embout.

4. Dispositif selon l'une quelconque des revendications précédentes, caractérisé en ce que lesdits moyens de verrouillage comprennent des moyens de blocage (25, 27, 76, 80, 82) pour immobiliser lesdits embouts l'un par rapport à l'autre, de manière libérable, dans la seconde position.

5. Dispositif selon l'une quelconque des revendications précédentes, caractérisé en ce que :
- l'un des embouts de liaison comprend une extrémité mâle (16b) propre à être engagée étroitement dans une extrémité femelle de réception (61) de l'autre embout de liaison,
- lesdites extrémités mâle et femelle complémentaires comportant, l'une, au moins un ergot (72, 74) de verouillage et, l'autre, un épaulement annulaire (64) de retenue contre lequel l'ergot est en appui lors dudit déplacement relatif pour verrouiller les embouts entre eux.

6. Dispositif selon la revendication 5, caractérisé en ce que les moyens de commandes comprennent une pièce de commande (38), disposée à l'intérieur dudit premier embout en étant, d'un côté, liée fixement à une partie des premiers moyens, ledit ergot (72, 74) entrainant cette pièce de commande, lors dudit déplacement relatif des moyens de verrouillage entre lesdites positions intermédiaire et seconde verrouillée, pour que cette pièce de commande provoque alors l'ouverture ou l'obturation progressive du passage intérieur du premier embout.

7. Dispositif selon l'une quelconque des revendications précédentes, caractérisé en ce que les moyens d'obturation comprennent deux disques (28, 30) superposés qui sont chacun percés d'ouvertures, les moyens de commande étant propres à entraîner en rotation relative ces disques, pour faire coïncider leurs ouvertures ou pour ne pas faire coïncider ces dites ouvertures.

8. Dispositif selon la revenidication 7, caractérisé en ce que le premier embout comprend deux éléments de guidage (37, 39) de la matière propre à circuler à travers ledit dispositif, ces éléments de guidage étant disposés dans le passage intérieur (26) du premier embout et de part et d'autre des disques auxquels ils sont liés et présentant, l'un, une face d'attaque et l'autre, une face de fuite à surface courbe.

9. Dispositif selon la revendication 8, caractérisé en ce que lesdits éléments présentent chacun une forme générale de diabolo.

10. Embout de liaison (6, 8) propre à être raccordé de manière amovible à un embout de liaison complémentaire pour former le dispositif (2) selon l'une quelconque des revendications 1 à 9.

11. Ensemble comprenant le dispositif (2) selon l'une quelconque des revendications 1 à 9 et au moins une première et une seconde conduites (4, 14) de fluides, chacune étant liée de manière étanche à un des embouts dudit dispositif.
